# FASCICULE DE BREVET EUROPEEN

(11) **EP 0 384 825 B1**
(45) Date de publication et mention de la délivrance du brevet: **30.03.1994**
(21) Numéro de dépôt: 90400456.1
(22) Date de dépôt: 20.02.1990
(51) Int. Cl.: G21C 3/356, G21C 3/32

(54) **Grille pour assemblage combustible nucléaire et procédé de montage mettant en oeuvre ladite grille**
Abstandshalter für Kernbrennstabbündel und Verfahren zur Montage unter Anwendung des Abstandshalters
Spacer grid for a nuclear fuel assembly, and mounting method using said grid

(30) Priorité: 21.02.1989 FR 8902242
(43) Date de publication de la demande: 29.08.1990
(73) Titulaire: FRAMATOME, 92400 Courbevoie (FR); COMPAGNIE GENERALE DES MATIERES NUCLEAIRES (COGEMA), 78141 Vélizy-Villacoublay (FR)
(72) Inventeur: Verdier, Michel, F-69100 Villeurbanne (FR)
(74) Mandataire: Fort, Jacques

(56) Documents cités:
- EP-A- 0 196 609
- EP-A- 0 280 595
- US-A- 3 679 546

## Description

L'invention concerne les grilles d'entretoisement pour assemblage combustible nucléaire, du type comprenant plusieurs jeux de plaquettes entrecroisées pour déterminer des cellules de réception de crayons de combustibles. De telles grilles sont utilisées pour retenir les crayons aux noeuds d'un réseau à mailles régulières, carrées ou triangulaires. Pour retenir les grilles sur les crayons tout en permettant à ces derniers de glisser en cas de dilatation différentielle, des crayons entre eux ou par rapport aux tirants sur lesquels sont fixées les grilles, les plaquettes sont généralement munies de ressorts qui appliquent les crayons contre une bossette fixe de la plaquette opposée à celle qui porte le ressort, ou contre un autre ressort. Des assemblages comportant de tels ressorts sont connus de EP-A-0 280 595 et de US-A-3 679 546.

Lorsqu'on insère directement les crayons de combustible dans les grilles d'un assemblage, il faut exercer sur eux une force d'insertion supérieure à la force de frottement des ressorts. Des précautions sont nécessaires pour éviter d'exercer une force excessive, ce qui accroît le temps de fabrication de l'assemblage. Le frottement des crayons sur les ressorts et les bossettes d'appui peut provoquer des rayures défavorables à la tenue de la gaine des crayons sous irradiation.

On a déjà tenté de résoudre le problème posé par le frottement des crayons de combustible sur les ressorts. En particulier, on a proposé d'insérer d'abord dans la grille un faisceau de crayons postiches qui refoule les ressorts, puis d'immobiliser les ressorts en position rétractée à l'aide d'un peigne constitué de fils de faible diamètre inséré dans la grille avant de retirer les crayons postiches et d'insérer les crayons réels. Cette solution est complexe et il est difficile d'insérer correctement l'ensemble des fils constituant le peigne dans une position où ces fils retiennent tous les ressorts, sans coincement.

L'invention vise notamment à fournir une grille d'entretoisement répondant mieux que celles antérieurement connues aux exigences de la pratique, notamment en ce qu'elle permet d'éviter le frottement des ressorts sur les crayons, lors de l'insertion de ces derniers, en ne mettant en oeuvre que des moyens simples.

L'invention utilise le fait qu'il est avantageux que les ressorts, plutôt que de faire partie intégrante des plaquettes, soient rapportés, car ils peuvent alors être en un matériau choisi pour ses propriétés mécaniques, tandis que les plaquettes sont en un matériau différent à faible section de capture neutronique, par exemple en alliage à base de zirconium.

Dans ce but, l'invention propose notamment une grille d'entretoisement suivant la revendication 1.

Les moyens de retenue peuvent être notamment constitués par un ergot d'accrochage sur la plaquette. Lorsque le ressort est en forme d'épingle en U ayant deux branches placées de part et d'autre de la plaquette et reliées l'une à l'autre à travers des échancrures de la plaquette, une au moins des branches a un ergot d'accrochage sur la plaquette lorsque le ressort est dans une première position longitudinale, dégageable de la plaquette par déplacement du ressort dans la direction des crayons. La solution est applicable aussi bien aux ressorts doubles, ayant deux branches élastiques d'appui sur des crayons respectifs, qu'aux ressorts à une seule branche élastique : dans le premier cas, les ergots sont décalés dans le sens de la longueur de la plaquette.

En général, les ressorts en épingle rapportés sur les plaquettes comportent une boucle. Le ressort peut alors être déplacé dans le sens des crayons en poussant ou en tirant la boucle, pour libérer l'ergot ou les ergots à l'aide d'un outil ou peigne inséré entre les rangées de crayons.

L'invention propose également un procédé de montage de crayons dans une grille d'assemblage combustible, caractérisé en ce qu'on constitue la grille avec des plaquettes sur lesquelles les ressorts sont en position rétractée, puis on repousse les ressorts de façon à dégager les moyens de retenue et à permettre aux ressorts de venir en appui contre les crayons.

L'invention sera mieux comprise à la lecture de la description qui suit d'un mode particulier de mise en oeuvre, donné à titre d'exemple non limitatif. La description se réfère aux dessins qui l'accompagnent, dans lesquels :
- la Figure 1 est une vue d'un fragment de grille, en coupe dans l'axe d'un ressort, montrant un jeu de deux plaquettes parallèles dont l'une est équipée d'un ressort représenté à l'état libre ;
- la Figure 2 est une vue de gauche de la Figure 1 ;
- la Figure 3, similaire à la Figure 1, montre les branches du ressort rétractées et accrochées sur la plaquette correspondante ;
- la Figure 4 est un schéma d'outil de libération de ressorts du type montré en Figures 1 à 3.

L'invention sera décrite dans son application à une grille présentant une constitution générale du type déjà divulgué dans le document US-A-4 646 431. La grille se compose de deux jeux de plaquettes en alliage à base de zirconium, les plaquettes d'un même jeu étant parallèles entre elles, et orthogonales aux plaquettes de l'autre jeu. Les plaquettes des deux jeux sont assemblées à mi-fer et soudées les unes aux autres.

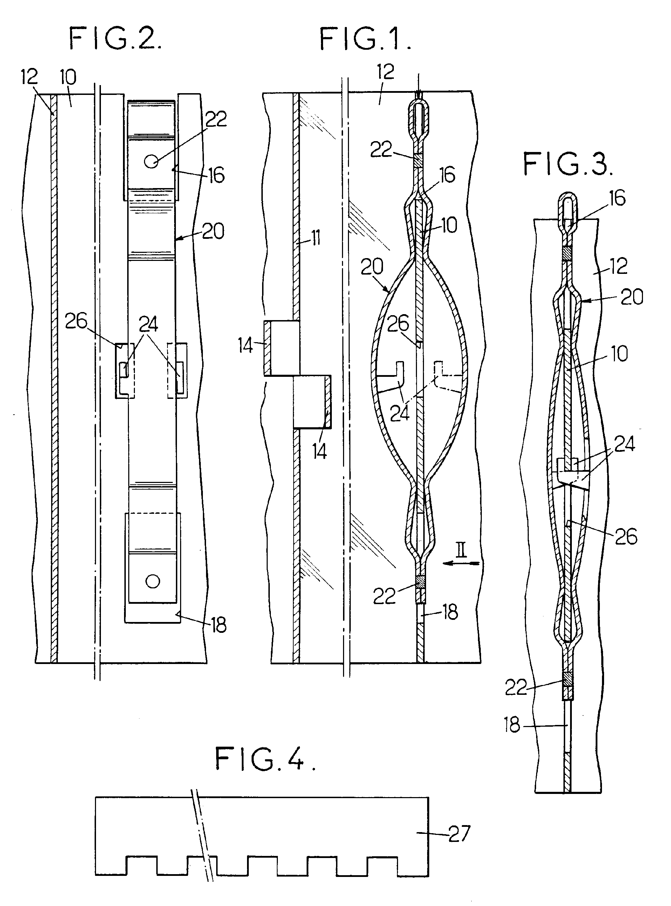

Les Figures 1 et 2 montrent uniquement deux plaquettes 10 et 11 appartenant à un jeu et une plaquette 12 appartenant à l'autre jeu. La plaquette 11 comporte des crevés destinés à former des bossages 14 d'appui de crayon. La plaquette 10 présente une échancrure haute 16 et une échancrure en forme de fenêtre 18 à chaque emplacement de réception d'un ressort 20.

Le ressort montré à titre d'exemple est du type à épingle en U double. Les deux branches du ressort sont fixées l'une à l'autre à travers l'échancrure haute 16 et l'échancrure 18 en forme de fenêtre, généralement par un point de soudure 22. En général, les ressorts sont en alliage à haute tenue mécanique, par exemple en alliage de chrome-nickel connu sous la marque Inconel, tandis que les plaquettes sont en alliage à base de zirconium.

La disposition décrite jusqu'à présent est couramment utilisée sur des grilles d'assemblage combustible pour réacteurs à eau sous pression.

Conformément à l'invention, des moyens sont prévus pour retenir temporairement les branches du ressort en position rétractée par rapport à la plaquette correspondante.

Dans le mode de réalisation montré sur les Figures, ces moyens de retenue comportent un ergot 24 en forme de crochet formé sur chaque branche à un emplacement tel qu'il puisse venir s'accrocher sur le bord d'une ouverture 26 pratiquée dans la plaquette. Chaque ergot 24 est placé approximativement à l'endroit où la branche présente, à l'état libre, une saillie maximale dans la cellule (environ 2 mm dans une grille représentative). Les échancrures 18 et 16 doivent être prévues pour permettre aux ressorts de se déplacer, dans le sens des crayons, entre une position où les ergots restent accrochés sur la plaquette (Figure 3) et une position où ils sont dégagés (Figures 1 et 2). Lorsque l'échancrure haute 16 est en forme d'encoche, comme dans le cas illustré sur les Figures, il suffit de donner à l'échancrure basse une dimension suffisante pour que le ressort 20 puisse être levé jusqu'à la position d'accrochage montrée en Figure 3.

Les ergots 24 peuvent être constitués de façon très simple, par des prolongements latéraux des branches, repliées vers la plaquette correspondante : les ergots, étant placés de part et d'autre du plan médian du ressort, n'interfèrent pas entre eux.

Dans le cas illustré sur les Figures, la boucle du ressort en U fait saillie au-dessus de la plaquette correspondante 12 lorsque le ressort est en position d'accrochage (Figure 3) : il est alors très simple de libérer les ergots en poussant simplement sur les boucles pour les ramener au niveau de l'arête supérieure des plaquettes, au moyen d'un outil constitué d'une ou plusieurs lames ou peignes, tels que le peigne 27 de la Figure 4, permettant de libérer un ou plusieurs ressorts simultanément quand cet outil est inséré entre les crayons de combustible et vient agir sur les boucles des ressorts dans le sens des crayons.

Il est possible de réaliser un ressort suivant l'invention en U simple, en munissant uniquement la branche élastique d'un ergot de retenue.

Un procédé d'introduction d'un faisceau de crayons de combustible dans une grille du genre montré en Figures 1 à 3 est le suivant : chaque plaquette est tout d'abord munie de ressorts, par exemple en mettant en oeuvre le procédé décrit dans le document US-A-4 530 146 déjà mentionné. Puis les ressorts de chaque plaquette sont amenés dans la position de verrouillage montrée en Figure 3. Cette opération peut s'effectuer de façon très simple en rapprochant les deux branches des ressorts jusqu'à leur donner un écartement suffisament faible pour que les ergots 24 encadrent la plaquette 10. Puis éventuellement en déplaçant la pince de serrage du ressort, on amène les ergots dans la position montrée en Figure 3 : il suffit alors de relâcher les ressorts 20.

Dans un exemple représentatif, où la saillie au repos de chaque branche est d'environ 2 mm, on peut former des ergots présentant une surface d'accrochage à 1,5 mm de la face d'appui de la branche correspondante. Dans ce cas, la saillie de chaque branche dans la position accrochée (Figure 3) est réduite à 1,10 mm environ, la force de traction exercée par chaque ergot étant de 4 à 5 daN.

Les plaquettes peuvent alors être assemblées de façon classique, par exemple par mise en oeuvre du procédé décrit dans le document US-A-4 530 146.

Une fois la grille montée, le faisceau de crayons peut y être introduit, également de façon classique si ce n'est que les ressorts rétractés laissent un jeu suffisant pour supprimer les risques de rayure et d'éraflure des gaines de crayons. Il est également possible d'adopter une vitesse de chargement plus élevée que par le passé et d'introduire simultanément un plus grand nombre de crayons. Du fait qu'il n'y a pas de force importante à exercer sur les crayons, les risques de déformation en arc disparaissent, d'où amélioration de la régularité des veines de passage de réfrigérant entre les crayons et de la rectitude de l'assemblage combustible.

Une fois tous les crayons en place, les ressorts doivent être déverrouillés : cette opération peut être effectuée très simplement lorsque, comme dans le cas illustré sur les Figures, les boucles des ressorts font saillie au-dessus des grilles lorsque les ressorts sont accrochés. Il suffit alors d'appuyer sur ces boucles, par exemple à l'aide d'un peigne introduit entre les crayons, pour décrocher les branches (Figure 3). Le retour des ressorts dans la position des Figures 1 et 2, où ils sont escamotés dans l'épaisseur de la grille, indique que les branches sont déverrouillées.

## Revendications

1. Grille d'entretoisement pour assemblage combustible nucléaire, comprenant plusieurs jeux de plaquettes (10, 11; 12) entrecroisées et fixées les unes aux autres pour délimiter des cellules de réception de crayons de combustible et des ressorts (20) en forme d'épingle portés par certaines au moins des plaquettes et faisant saillie à l'intérieur de cellules correspondantes pour exercer, sur des crayons de combustible placés dans les cellules, un effort transversal de maintien, caractérisée en ce que chaque ressort (20) porte des moyens de retenue temporaire en position rétractée par rapport à la plaquette, désarmables en exerçant sur le ressort une force de direction déterminée et d'intensité suffisante pour le libérer.

2. Grille selon la revendication 1, caractérisée en ce que les moyens de retenue sont constitués par au moins un ergot d'accrochage (24) d'une partie élastique du ressort sur la plaquette.

3. Grille selon la revendication 2, caractérisée en ce que les ressorts ont deux branches situées de part et d'autre de la plaquette, reliées l'une à l'autre à travers des échancrures (16, 18) de la plaquette, une au moins des branches ayant un ergot d'accrochage (24) sur la plaquette lorsque le ressort est dans une première position longitudinale et dégageable de la plaquette par déplacement du ressort dans la direction des crayons.

4. Grille selon la revendication 3, caractérisée en ce que le ressort est à deux branches élastiques munies d'ergots décalés (24) dans le sens longitudinal de la plaquette correspondante, destinés à s'accrocher sur le bord d'une ouverture (26) de la plaquette (10).

5. Grille selon la revendication 3 ou 4, caractérisée en ce que les ergots (24) sont constitués par des prolongements latéraux des branches, repliés vers la plaquette correspondante.

6. Grille selon l'une quelconque des revendications précédentes, caractérisée en ce que chaque ressort (20) présente une boucle en saillie au-dessus de la plaquette correspondante, permettant de déplacer le ressort dans la direction des crayons en le poussant.

7. Procédé de montage de crayons dans une grille d'assemblage combustible selon l'une quelconque des revendications 1 à 6, caractérisé en ce qu'on constitue la grille avec des plaquettes sur lesquelles les ressorts sont en position rétractée, puis on repousse les ressorts de façon à dégager les moyens de retenue et à permettre aux ressorts de venir en appui contre les crayons.

8. Outil de déverrouillage des ressorts d'une grille selon l'une quelconque des revendications 1 à 6, caractérisé en ce qu'il comprend au moins un peigne (27) permettant de libérer plusieurs ressorts simultanément par appui sur eux, le peigne étant prévu pour être inséré entre les crayons.

## Patentansprüche

1. Abstandsgitter für Kernbrennelementkassetten mit mehreren Gruppen von Platten (10, 11; 12), die gekreuzt angeordnet und aneinander befestigt sind, um Aufnahmezellen für Brennstäbe einzugrenzen, und mit Schnappfedern (20) auf wenigstens bestimmten Platten, die zum Inneren bestimmter Zellen hin überstehen, um auf die in diesen Zellen angeordneten Brennstäbe eine transversale Haltekraft auszuüben,
dadurch **gekennzeichnet,** daß jede Feder (20) Mittel zum zeitweisen Zurückhalten in einer in bezug auf die Platte zurückgezogenen Stellung aufweist, wobei die Mittel lösbar sind, indem auf die Feder eine Kraft in einer vorbestimmten Richtung und mit ausreichender Stärke ausgeübt wird, um die Feder zu lösen.

2. Abstandsgitter nach Anspruch 1,
dadurch gekennzeichnet, daß die Haltemittel aus mindestens einem Haken (24) eines elastischen Teils der Feder zum Einhaken auf der Platte bestehen.

3. Abstandsgitter nach Anspruch 2,
dadurch gekennzeichnet, daß die Federn zwei Schenkel aufweisen, die zu beiden Seiten der Platte angeordnet sind, und die miteinander durch Öffnungen (16, 18) der Platte verbunden sind, wobei mindestens ein Schenkel einen Haken (24) zum Einhaken auf der Platte aufweist, während die Feder in einer ersten longitudinalen Stellung ist, und der von der Platte durch das Verschieben der Feder in Richtung der Brennstäbe lösbar ist.

4. Abstandsgitter nach Anpruch 3,
dadurch gekennzeichnet, daß die Feder zwei elastische Schenkel aufweist, die mit in Längsrichtung der entsprechenden Platte gegeneinander versetzt angeordneten Haken (24) versehen sind, die dazu bestimmt sind, sich am Rand einer Öffnung (26) der Platte (10) einzuhaken.

5. Abstandsgitter nach Anspruch 3 oder 4,
dadurch gekennzeichnet, daß die Haken (24) aus seitlichen Verlängerungen der Schenkel bestehen, die auf die entsprechende Platte zu gebogen sind.

6. Abstandsgitter nach einem der vorstehenden Ansprüche,
dadurch gekennzeichnet, daß jede Feder (20) eine oberhalb der entsprechenden Platte vorstehende Schleife aufweist, die es ermöglicht, die Feder in Richtung der Brennstäbe zu verschieben, indem auf die Schleifen gedrückt wird.

7. Verfahren zur Montage von Brennstäben in ein Gitter einer Brennelementkassette nach einem der Ansprüche 1 bis 6,
dadurch gekennzeichnet, daß das Gitter mit Platten errichtet wird, auf denen die Federn in zurückgezogener Stellung angeordnet sind, die Federn gelöst werden, derart, daß die Rückhaltemittel gelöst werden und es den Federn ermöglicht wird, in Andruck gegen die Stäbe zu kommen.

8. Entriegelungswerkzeug für Federn eines Abstandsgitters nach einem der Ansprüche 1 bis 6,
gekennzeichnet durch mindestens einen Kamm (27), der es ermöglicht, gleichzeitig mehrere Federn durch Andruck auf diese zu lösen, wobei der Kamm vorgesehen ist, um zwischen die Stäbe eingefügt zu werden.

## Claims

1. A spacer grid for a nuclear fuel assembly, comprising a plurality of sets of plates (10,11;12) which are interleaved and mutually interconnected to define cells for receiving fuel rods and hairpin springs (20) carried by at least certain of the plates and projecting into respective cells for exerting a transverse holding force on fuel rods placed in the cells,
characterized in that each spring (20) is provided with means for retaining it temporarily in a retracted condition with respect to the plate, releasable by exerting a force of predetermined direction and of sufficient value on the spring.

2. Grid according to claim 1,
characterized in that the retention means comprise at least one spur (24) for locking a resilient part of the spring on the plate.

3. Grid according to claim 2,
characterized in that the springs with two legs locked each on one side of the plate, said legs being connected across openings (16,18) of the plate, at least one of the legs having a spur (24) for engaging the plate when the spring is in a first longitudinal position, released from the plate upon movement of the spring in a direction parallel to the rods.

4. Grid according to claim 3,
characterized in that the spring has two resilient legs provided with spurs (24) which are mutually offset in the longitudinal direction of the respective plate, arranged for engagement with an edge of an opening (26) in the plate (10).

5. Grid according to claim 3 or 4,
characterized in that the spurs (24) consist of lateral extensions of the legs, bent back toward the respective plate.

6. Grid according to any one of the preceeding claims,
characterized in that each spring (20) has a looped section above the respective plate, enabling to move the spring in the direction of the rods by pushing it.

7. A process of loading rods into a fuel assembly grid according to any one of claims 1-6,
characterized by the steps of forming the grid with plates on which the springs are in retracted condition, then forcibly moving the springs for unhooking the retaining means and permitting the springs to come into abutment against the rods.

8. A tool for unlocking the springs of a grid according to any one of claims 1-6,
characterized in that it comprises at least one comb (27) enabling to simultaneously release a plurality of springs by abutting them, the comb been arranged for being inserted between the rods.
